# EUROPEAN PATENT SPECIFICATION

(11) **EP 3 992 132 B1**
(45) Date of publication and mention of the grant of the patent: **01.01.2025**
(21) Application number: 21206076.8
(22) Date of filing: 02.11.2021
(51) Int. Cl.: B66B 1/46

(54) **ELEVATOR CONTROL DEVICE, METHOD OF PREVENTING FALSE TRIGGERING OF THE ELEVATOR CONTROL DEVICE, AND ELEVATOR SYSTEM**
AUFZUGSSTEUERUNGSVORRICHTUNG, VERFAHREN ZUR VERMEIDUNG DER FEHLAUSLÖSUNG DER AUFZUGSSTEUERUNGSVORRICHTUNG UND AUFZUGSYSTEM
DISPOSITIF DE COMMANDE D'ASCENSEUR, PROCÉDÉ DE PRÉVENTION DE FAUX DÉCLENCHEMENT DU DISPOSITIF DE COMMANDE D'ASCENSEUR, ET SYSTÈME D'ASCENSEUR

(30) Priority: 03.11.2020 CN 202011208856
(43) Date of publication of application: 04.05.2022
(73) Proprietor: Otis Elevator Company, Farmington, Connecticut 06032 (US)
(72) Inventor: QIU, Heping, Shanghai, 200335 (CN)
(74) Representative: Dehns

(56) References cited:
- EP-A1- 3 412 613
- WO-A1-2022/010331
- JP-A- H06 100 248

## Description

### FIELD OF THE INVENTION

The present invention relates to the field of control devices, and more specifically, the present invention relates to an elevator control device, a method for preventing false triggering of a control device, and an elevator system.

### BACKGROUND OF THE INVENTION

Recently, in response to the pandemic of the new coronavirus, major manufacturers have focused on the research of non-contact elevator control devices. Existing non-contact elevator control devices include infrared induction or capacitive induction non-contact control buttons, which can only realize the identification of existence of objects within a specific distance range.

JPH06100248A discloses an elevator car call registration device capable of preventing a drop in operation efficiency due to the concurrent pressing of adjacent destination floor buttons in error. EP3412613A1 discloses an elevator system including an elevator operating panel having at least one button and an audio orientation system including a proximity sensor. EP3412613A1 discloses an elevator control device according to the preamble of claim 1.

### SUMMARY OF THE INVENTION

An object of the present invention is to solve or at least alleviate the problems existing in the prior art.

According to a first aspect of the present invention, there is provided an elevator control device as claimed in claim 1.

In some embodiments of the elevator control device, the plurality of buttons include a TOF sensor to sense the distance to the obj ect, and the signals sent by the plurality of buttons include distance information.

In some embodiments of the elevator control device, the processor is configured to receive any two signals sent by any designated button of the plurality of buttons in time sequence within a first time period T, wherein the two signals include first distance information a₁ and second distance information a₂ respectively, and when the two signals satisfy that the first distance signal a₁ is in a first distance range R₁ and the second distance signal a₂ is in a second distance range R₂, it is determined that there is a non-contact button operation, wherein an intermediate value of the first distance range R₁ is larger than an intermediate value of the second distance range R₂.

In some embodiments of the elevator control device, the processor is configured to receive any three signals sent by any designated button of the plurality of buttons in time sequence within a first time period T, wherein the three signals include first distance information a₁, second distance information a₂ and third distance information as respectively, and when the three signals satisfy that the first distance signal a₁ is in a first distance range R₁, the second distance signal a₂ is in a second distance range R₂ and the third distance signal as is in a third distance range R₃, it is determined that there is a non-contact button operation, wherein an intermediate value of the first distance range R₁ is larger than an intermediate value of the second distance range R₂, and the intermediate value of the second distance range R₂ is larger than an intermediate value of the third distance range R₃.

In some embodiments of the elevator control device, the processor is configured to: when a non-contact button operation is sensed by the designated button, determine whether at least one button adjacent to the designated button has sensed the approaching of an object within a second time period T'; if yes, not execute the operation corresponding to the designated button; and if not, execute the operation corresponding to the designated button.

In some embodiments of the elevator control device, the process of determining whether at least one button adjacent to the designated button has sensed an object includes sensing, in the second time period T', whether there is an object whose distance from each of the adjacent buttons is in the first distance range R₁, the second distance range R₂ or the third distance range R₃.

In some embodiments of the elevator control device, the plurality of buttons include:
a button panel;
a TOF sensor on a back side of the button panel; and
a printed circuit board, wherein the TOF sensor is electrically coupled to the printed circuit board so as to be connected with the processor.

In some embodiments of the elevator control device, the button panel is a light-transmitting panel, and the printed circuit board is further provided with LED lights, which are lit up after the button is triggered.

In some embodiments of the elevator control device, the button adjacent to the designated button is a button whose distance from the designated button is in a range of 10mm-100mm, or the button adjacent to the designated button is a button directly adjacent to the designated button or a button spaced apart from the designated button by only one button.

According to a second aspect of the present invention, there is provided an elevator system as claimed in claim 10.

According to a third aspect of the present invention, there is provided a method for preventing false triggering of an elevator control device as claimed in claim 11.

In some embodiments, the method includes receiving any two signals sent by any designated button of the plurality of buttons in time sequence within a first time period T, wherein the two signals include first distance information a₁ and second distance information a₂ respectively, and when the two signals satisfy that the first distance signal a₁ is in a first distance range R₁ and the second distance signal a₂ is in a second distance range R₂, it is determined that there is a non-contact button operation, wherein an intermediate value of the first distance range R₁ is larger than an intermediate value of the second distance range R₂.

In some embodiments, the method includes receiving any three signals sent by any designated button of the plurality of buttons in time sequence within a first time period T, wherein the three signals include first distance information a₁, second distance information a₂ and third distance information as respectively, and when the three signals satisfy that the first distance signal a₁ is in a first distance range R₁, the second distance signal a₂ is in a second distance range R₂ and the third distance signal as is in a third distance range R₃, it is determined that there is a non-contact button operation, wherein an intermediate value of the first distance range R₁ is larger than an intermediate value of the second distance range R₂, and the intermediate value of the second distance range R₂ is larger than an intermediate value of the third distance range R₃.

In some embodiments, the method includes: when a non-contact button operation is sensed by the designated button, determining whether at least one button adjacent to the designated button has sensed the approaching of an object within a second time period T'; if yes, not executing the operation corresponding to the designated button; and if not, executing the operation corresponding to the designated button.

In some embodiments, the process of determining whether at least one button adjacent to the designated button has sensed an object includes sensing, in the second time period T', whether there is an object whose distance from each of the adjacent buttons is in the first distance range R₁, the second distance range R₂ or the third distance range R₃.

The device and method according to the embodiments of the present invention can effectively prevent false triggering of an elevator control device.

### BRIEF DESCRIPTION OF THE DRAWINGS

With reference to the accompanying drawings, the disclosure of the present invention will become easier to understand. It can be easily understood by those skilled in the art that these drawings are only for illustrative purpose, and are not intended to limit the scope of protection of the present invention. In addition, similar numbers in the drawings are used to denote similar components, in which:
FIG. 1 shows a schematic view of a control device according to an embodiment of the present invention;
FIG. 2 shows a schematic structural view of a button according to the embodiment of the present invention;
FIG. 3 shows a schematic principle view of a TOF sensor used by the button according to the embodiment of the present invention;
FIG. 4 is a schematic view showing a person leaning on the control device according to the embodiment of the present invention; and
FIGS. 5 and 6 show schematic views of typical signals collected by a TOF sensor.

### DETAILED DESCRIPTION OF THE EMBODIMENT(S) OF THE INVENTION

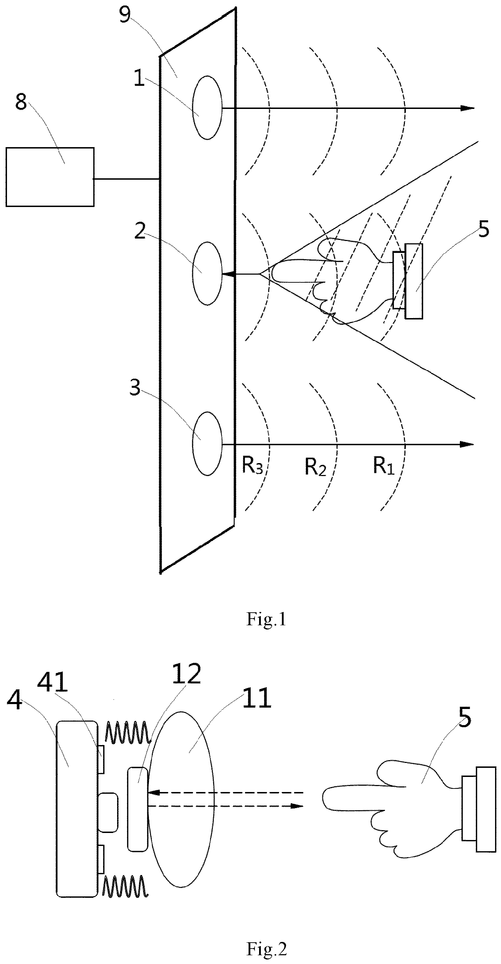

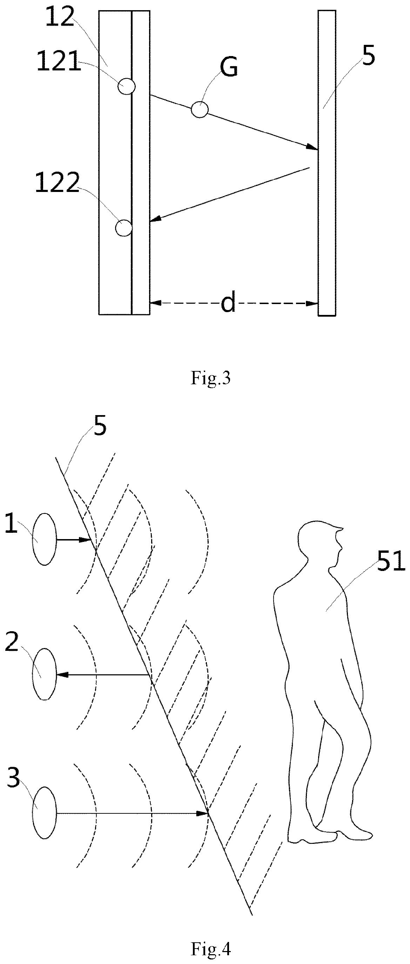

Reference is made to FIG. 1, which shows a control device according to an embodiment of the present invention. The control device includes a control panel 9 having a plurality of buttons, and the plurality of buttons may include a first button 1, a second button 2 and a third button 3. Although only three buttons are shown, in fact, the plurality of buttons refer to two or more buttons, including any number larger than two. The control device is used as an elevator control device in a building, and the control panel may be installed in an elevator hall or elevator car. The plurality of buttons may be, for example, an elevator-calling button, a going-up button, a going-down button, a door-opening button, a door-closing button, a floor selecting button, and an alarm button in the elevator control panel, etc. The plurality of buttons can sense approaching of an object and output signals. In some embodiments, the plurality of buttons may be buttons based on proximity sensors such as infrared sensing, Hall effect sensing, etc., which can sense whether there is an object within a detectable distance, and output signals when there is an object. In the embodiment of the present invention, some or all of the plurality of buttons may be buttons equipped with TOF sensors. The specific structure of such buttons will be described in detail below in conjunction with FIG. 2 and FIG. 3. A TOF (time of fly) sensor is also called a time-of-fly sensor. It can not only detect the approaching of an object, that is, detect whether the object is within a detectable distance, but can also detect information of the distance from the object to the button. The control device also includes a processor 8, which is connected to the plurality of buttons of the control panel 9 to receive signals sent from the plurality of buttons. The processor 8 may be integrated at the control panel 9 or may be arranged remotely. In the embodiment of the present invention, the processor 8 is configured to, when receiving signals sent by at least two adjacent buttons (such as two, three or more than three) of the plurality of buttons within a defined time period, then not execute an operation corresponding to the signals. For example, in a case where the plurality of buttons are equipped with proximity sensors based on infrared sensing, Hall effect sensing, etc., the processor 8 may be configured to, when receiving signals sent by three adjacent buttons within a defined time period such as 0.3 seconds, not execute an operation corresponding to the signals; in other words, the signals are invalidated. The length of the defined time period may be set arbitrarily; for example, based on actual requirements (such as the required sensitivity), it may be set to any value from 0.1 to 2 seconds, such as any value from 0.5 to 1 second, such as 0.2 seconds, 0.4 seconds, 0.8 seconds, etc. The adjacent buttons may be set based on actual requirements (such as the required sensitivity); for example, they may be set based on the distance or based on the positions on the control panel. For example, the buttons having a distance in a range of 10mm-100mm may be set as the adjacent buttons, or the distance may for example be set in a range of 10mm-20mm; alternatively, the adjacent buttons may refer to buttons that are directly adjacent in the array of buttons, or they may refer to buttons that are directly adjacent and buttons that are spaced apart by only one button in the array of buttons, or they may refer to buttons that are directly adjacent and buttons that are spaced apart by one or two buttons in the array of buttons, etc.

Next, reference is made to FIGS. 2 and 3 to introduce the button according to the embodiment of the present invention. The plurality of buttons may include: a button panel 11; a TOF sensor 12 on a back side of the button panel 11 to sense the distance to an object 5; and a printed circuit board 4. The TOF sensor 12 is electrically coupled to the printed circuit board 4, and the printed circuit board 4 may be connected to the plurality of buttons and the processor 8, thereby realizing the connection between the plurality of buttons and the processor 8, including electrical and/or signal connections. As shown in FIG. 3, the TOF sensor 12 may include a photon emitter 121 and a photon receiver 122. The photon emitter 121 emits a photon G, which is reflected after contacting the object 5, and which is received by the photon receiver 122. Through the time of flight of the photon G and the speed of light, the distance to the object 5 is calculated. In some embodiments, the panel 11 is a light-transmitting panel, and LED lights 41 are also provided on the printed circuit board 4. The LED light 41 are lit up after the button is triggered.

Next, reference is made to FIG. 4. When a person 51 is leaning on the elevator control panel, the first button 1, the second button 2, and the third button 3 sense the approaching of the object and send signals to the processor; then, the processor 8 does not execute operations corresponding to the first button 1, the second button 2 and the third button 3. The processor 8 can be set based on actual requirements (such as the required sensitivity). For example, in some embodiments, the processor 8 may be configured to, when at least two adjacent buttons have sensed the approaching of an object, not execute operations related to the at least two adjacent buttons. Alternatively, in some other embodiments, the processor 8 may be configured to not execute related operations only when at least three adjacent buttons have sensed the approaching of an object, and execute related operations even when two adjacent buttons have sensed the approaching of an object. Alternatively, in some other embodiments, the processor 8 may be configured to not execute related operations only when at least four adjacent buttons have sensed the approaching of an object, and execute related operations even when two or three adjacent buttons have sensed the approaching of an object, etc.

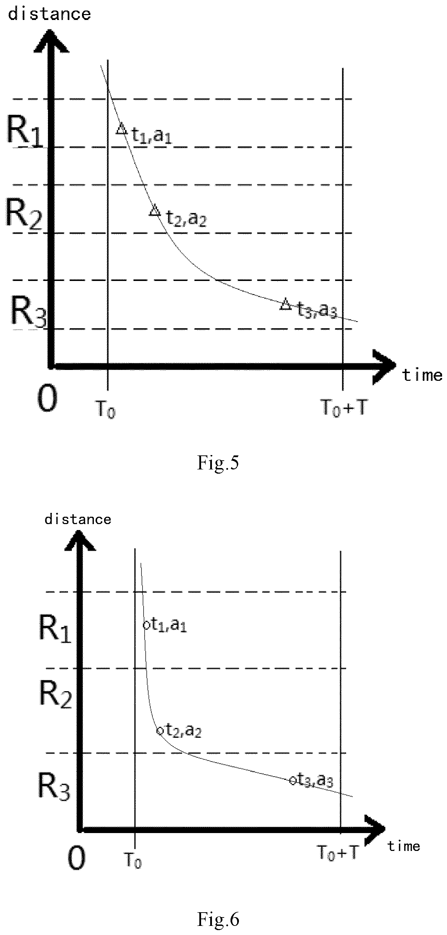

In some embodiments, when the button is equipped with the TOF sensor, the processor 8 is configured to receive any three signals sent by any one (hereinafter referred to a designated button) of the plurality of buttons in time sequence within a first time period T, wherein the three signals include first distance information a₁, second distance information a₂ and third distance information as respectively, and when the three signals satisfy that the first distance signal a₁ is in a first distance range R₁, the second distance signal a₂ is in a second distance range R₂ and the third distance signal as is in a third distance range R₃, it is determined that there is a non-contact button operation, wherein an intermediate value of the first distance range R₁ is larger than an intermediate value of the second distance range R₂, and the intermediate value of the second distance range R₂ is larger than an intermediate value of the third distance range R₃. For example, the third distance range R₃ may be an range of 0-2 cm of the distance from the button, with an intermediate value of 1 cm; the second distance range R₂ may be an range of 2-4 cm of the distance from the button, with an intermediate value of 3 cm; and the first distance range R₁ may be an range of 4-6 cm of the distance from the button, with an intermediate value of 5 cm. The first distance range R₁, the second distance range R₂ and the third distance range R₃ may be arbitrarily set within the detectable range of the TOF sensor. For example, as shown in FIGS. 1, 4, and 6, the first distance range R₁, the second distance range R₂ and the third distance range R₃ may be adjacent to each other. In some other embodiments, as shown in FIG. 5, the first distance range R₁, the second distance range R₂ and the third distance range R₃ may be spaced apart. Alternatively, although not shown, the first distance range R₁, the second distance range R₂ and the third distance range R₃ may also partially overlap, for example, overlap by a small portion.

For example, the TOF sensor may collect N signals (such as 50, depending on the sampling frequency and the value of the first time period T) including distance information in the first time period T. If there are any three signals which satisfy that the first distance signal a₁ at time t₁ is in the first distance range R₁, the second distance signal a₂ at time t₂ is in the second distance range R₂ and the third distance signal as at time t₃ is in the third distance range R₃, wherein t₁<t₂<t₃, then the processor determines that there is a non-contact button operation. In some embodiments, in a case where there is no aforementioned non-contact button operation, the processor invalidates the received signals indicating object approaching. In this way, the triggering action of the user's finger approaching the button can be accurately captured, and other operations such as the user's translation on the panel can be filtered out. For example, even if the user's hand passes through identification areas of certain buttons when the user naturally puts down the hand after pressing the button, the signals detected by these buttons will be ignored because they do not meet the above identification conditions. The above-mentioned first time period T may be selected based on actual conditions (for example, depending on the required sensitivity); for example, it may be in a range of 0.5-2 seconds, or for example, in a range of 0.8-1.5 seconds. As shown in FIG. 5 and FIG. 6, a calculation starting point T₀ of the first time period T may be any point or may be a designated point; for example, T₀ is selected every certain time range, such as 0.2 seconds.

In some embodiments, the processor may be configured to: when the above-mentioned non-contact button operation is sensed by the designated button, determine whether one, two or more buttons adjacent to the designated button have sensed the approaching of an object within a second time period T'; if yes, not execute the operation corresponding to the designated button; and if not, execute the operation corresponding to the designated button. The starting point of the second time period T' may be coincident with or offset from the starting point T₀ of the first time period T, for example, slightly delayed. The length of the second time period T' may be the same as or different from the first time period T, for example, slightly longer than the first time period T. Depending on the desired sensitivity, the processor may be configured to not execute the corresponding operation when one adjacent button has sensed the approaching of an object, or not execute the corresponding operation when at least two adjacent buttons have sensed the approaching of an object, and execute the corresponding operation when only one adjacent button has sensed the approaching of an object, etc. The further filtering of this step can further effectively avoid false triggering and operating the plurality of buttons, such as a situation where a person or an object is leaning on the control panel.

In some embodiments, the process of determining whether one, two or more buttons adjacent to the designated button have sensed an object includes sensing, in the second time period T', whether there is an object whose distance from each of the adjacent buttons is in the first distance range, the second distance range or the third distance range. For example, as shown in FIG. 2, in the case of a person leaning on the control panel, even if the first button 1 has sensed a non-contact button operation, for example, as described above, the first button 1 has sensed that an object sequentially passes through the first distance range R₁, the second distance range R₂ and third distance range R₃ which have a decreasing distance from the designated button within the second time period T', but the second button 2 adjacent to the first button 1 has sensed the object is in the second distance range R₂ from the second button 2, and the third button 3 adjacent to the first button 1 has also sensed the object is in the first distance range R₁ from the third button 3, then the processor 8 does not execute the operation corresponding to the designated button at this point. In some embodiments, the processor may be configured to not execute the corresponding operation when only one adjacent button has sensed an object, while in some other embodiments, the processor may be configured to not execute the corresponding operation only when at least two adjacent buttons have sensed an object, and still execute the corresponding operation when only one adjacent button has sensed an object. Different sensitivities can be achieved through different configurations of the processor.

Next, reference is made to FIGS. 5 and 6, which show typical curves from which non-contact button operations can be identified. It should be understood that the curves in the figures are fitted by collected signals, and the non-contact button operation can be determined as long as any three of the data points in the curves satisfy the condition.

According to another aspect, an elevator system is provided, wherein the elevator system includes the control device according to various embodiments, which serves as a hall control device or an in-car control device.

According to another aspect, a method for preventing false triggering of a control device is provided, and the method includes: when signals sent by at least two adjacent buttons of the plurality of buttons such as two, three or more buttons are received within a defined time period, not executing an operation corresponding to the signals.

In some embodiments, a method for identifying a non-contact button operation in a button including a TOF sensor is also provided, and the method includes: receiving any three signals including first distance information a₁, second distance information a₂ and third distance information a₃, sent by a designated button of the plurality of buttons in time sequence within a first time period T, wherein when the three signals satisfy that the first distance signal a₁ is in a first distance range R₁, the second distance signal a₂ is in a second distance range R₂ and the third distance signal as is in a third distance range R₃, it is determined that there is a non-contact button operation, wherein an intermediate value of the first distance range R₁ is larger than an intermediate value of the second distance range R₂, and the intermediate value of the second distance range R₂ is larger than an intermediate value of the third distance range R₃. In the above embodiments, three signals and three distance ranges are used as the judgment basis, and in some embodiments, only two signals and two distance ranges may be used as the judgment basis for non-contact button operation. For example, in some embodiments, any two signals sent by any designated button of the plurality of buttons in time sequence within the first time period T are received, wherein the two signals include first distance information a₁ and second distance information a₂ respectively, and when the two signals satisfy that the first distance signal a₁ is in the first distance range R₁ and the second distance signal a₂ is in the second distance range R₂, it is determined that there is a non-contact button operation, wherein an intermediate value of the first distance range R₁ is larger than an intermediate value of the second distance range R₂.

In some embodiments, the method for preventing false triggering may be triggered by a non-contact button operation identified by the above method, wherein when it is identified that the designated button has sensed a non-contact button operation, it is determined whether at least one button adjacent to the designated button such as one, two or more buttons have sensed the approaching of an object within the second time period T'; if yes, the operation corresponding to the designated button is not executed; and if not, the operation corresponding to the designated button is executed. The foregoing step of determining whether at least one button adjacent to the designated button such as one, two or more buttons have sensed an object further includes sensing, in the second time period T', whether there is an object whose distance from each of the adjacent buttons is in the first distance range R₁, the second distance range R₂ or the third distance range R₃.

The specific embodiments described above are only to more clearly describe the principle of the present invention, in which various components are clearly shown or described to make the principle of the present invention easier to understand. Those skilled in the art can easily make various modifications or changes to the present disclosure without departing from the scope of the appended claims. Therefore, it should be understood that these modifications or changes should be included in the scope of patent protection of the appended claims.

## Claims

1. An elevator control device, comprising:
a control panel (9), which comprises a plurality of buttons (1, 2, 3), each of the plurality of buttons being capable of sensing the approaching of an object in a non-contact manner; and
a processor (8), which is connected to the control panel (9) to receive signals sent by the plurality of buttons (1, 2, 3) when the approaching of an object is sensed;
**characterized in that** the processor (8) is configured to, when receiving signals sent by at least two adjacent buttons of the plurality of buttons within a defined time period, not execute an operation corresponding to the signals.

2. The elevator control device according to claim 1, wherein the plurality of buttons (1, 2, 3) comprise a TOF sensor (12) to sense the distance to the object (5), and the signals sent by the plurality of buttons (1, 2, 3) comprise distance information.

3. The elevator control device according to claim 2, wherein the processor (8) is configured to receive any two signals sent by any designated button of the plurality of buttons (1, 2, 3) in time sequence within a first time period T, the two signals comprise first distance information a₁ and second distance information a₂ respectively, and when the two signals satisfy that the first distance signal a₁ is in a first distance range R₁ and the second distance signal a₂ is in a second distance range R₂, it is determined that there is a non-contact button operation, wherein an intermediate value of the first distance range R₁ is larger than an intermediate value of the second distance range R₂.

4. The elevator control device according to claim 2 or 3, wherein the processor (8) is configured to receive any three signals sent by any designated button of the plurality of buttons (1, 2, 3) in time sequence within a first time period T, the three signals comprise first distance information a₁, second distance information a₂ and third distance information as respectively, and when the three signals satisfy that the first distance signal a₁ is in a first distance range R₁, the second distance signal a₂ is in a second distance range R₂ and the third distance signal as is in a third distance range R₃, it is determined that there is a non-contact button operation, wherein an intermediate value of the first distance range R₁ is larger than an intermediate value of the second distance range R₂, and the intermediate value of the second distance range R₂ is larger than an intermediate value of the third distance range R₃.

5. The elevator control device according to claim 3 or 4, wherein the processor (8) is configured to: when a non-contact button operation is sensed by the designated button, determine whether at least one button adjacent to the designated button has sensed the approaching of an object (5) within a second time period T'; if yes, not execute the operation corresponding to the designated button; and if not, execute the operation corresponding to the designated button.

6. The elevator control device according to claim 5, wherein the process of determining whether at least one button adjacent to the designated button has sensed an object (5) comprises sensing, in the second time period T', whether there is an object whose distance from each of the adjacent buttons is in the first distance range R₁, the second distance range R₂ or the third distance range R₃.

7. The elevator control device according to any preceding claim, wherein the plurality of buttons (1, 2, 3) each comprises:
a button panel (11);
a TOF sensor (12) on a back side of the button panel (11); and
a printed circuit board (4), wherein the TOF sensor (12) is electrically coupled to the printed circuit board (4) so as to be connected with the processor (8).

8. The elevator control device according to claim 7, wherein the button panel (11) is a light-transmitting panel, and the printed circuit board (4) is further provided with LED lights (41), which are lit up after the button is triggered.

9. The elevator control device according to any preceding claim, wherein the button adjacent to the designated button is a button whose distance from the designated button is in a range of 10mm-100mm, or the button adjacent to the designated button is a button directly adjacent to the designated button or a button spaced apart from the designated button by only one button.

10. An elevator system, comprising the elevator control device according to any one of claims 1 to 9, which serves as a hall control device or an in-car control device.

11. A method for preventing false triggering of an elevator control device, the elevator control device comprising a control panel (9) which comprises a plurality of buttons (1, 2, 3), and each of the plurality of buttons (1, 2, 3) being capable of sensing the approaching of an object (5) in a non-contact manner and sending a signal; wherein when signals sent by at least two adjacent buttons of the plurality of buttons (1, 2, 3) are received within a defined time period, an operation corresponding to the signals is not executed.

12. The method for preventing false triggering according to claim 11, wherein the method comprises receiving any two signals sent by any designated button of the plurality of buttons (1, 2, 3) in time sequence within a first time period T, the two signals comprise first distance information a₁ and second distance information a₂ respectively, and when the two signals satisfy that the first distance signal a₁ is in a first distance range R₁ and the second distance signal a₂ is in a second distance range R₂, it is determined that there is a non-contact button operation, wherein an intermediate value of the first distance range R₁ is larger than an intermediate value of the second distance range R₂.

13. The method for preventing false triggering according to claim 11 or 12, wherein the method comprises receiving any three signals sent by any designated button of the plurality of buttons in time sequence within a first time period T, the three signals comprise first distance information a₁, second distance information a₂ and third distance information as respectively, and when the three signals satisfy that the first distance signal a₁ is in a first distance range R₁, the second distance signal a₂ is in a second distance range R₂ and the third distance signal as is in a third distance range R₃, it is determined that there is a non-contact button operation, wherein an intermediate value of the first distance range R₁ is larger than an intermediate value of the second distance range R₂, and the intermediate value of the second distance range R₂ is larger than an intermediate value of the third distance range R₃.

14. The method for preventing false triggering according to claim 12 or 13, wherein the method comprises: when a non-contact button operation is sensed by the designated button, determining whether at least one button adjacent to the designated button has sensed the approaching of an object within a second time period T'; if yes, not executing the operation corresponding to the designated button; and if not, executing the operation corresponding to the designated button.

15. The method for preventing false triggering according to claim 14, wherein the process of determining whether at least one button adjacent to the designated button has sensed an object comprises sensing, in the second time period T', whether there is an object whose distance from each of the adjacent buttons is in the first distance range R₁, the second distance range R₂ or the third distance range R₃.

## Patentansprüche

1. Aufzugssteuerungsvorrichtung, umfassend:
ein Steuertafel (9), die eine Vielzahl von Tasten (1, 2, 3) umfasst, wobei jede der Vielzahl von Tasten in der Lage ist, das Annähern eines Objekts berührungslos zu erfassen; und
einen Prozessor (8), der mit der Steuertafel (9) verbunden ist, um Signale zu empfangen, die durch die Vielzahl von Tasten (1, 2, 3) gesendet werden, wenn das Annähern eines Objekts erfasst wird;
**dadurch gekennzeichnet, dass** der Prozessor (8) dazu konfiguriert ist, bei Empfangen von Signalen, die durch mindestens zwei benachbarte Tasten der Vielzahl von Tasten innerhalb eines definierten Zeitraums gesendet werden, eine den Signalen entsprechende Betätigung nicht auszuführen.

2. Aufzugssteuerungsvorrichtung nach Anspruch 1, wobei die Vielzahl von Tasten (1, 2, 3) einen TOF-Sensor (12) zum Erfassen der Entfernung zu dem Objekt (5) umfasst und die durch die Vielzahl von Tasten (1, 2, 3) gesendeten Signale Entfernungsinformationen umfassen.

3. Aufzugssteuerungsvorrichtung nach Anspruch 2, wobei der Prozessor (8) dazu konfiguriert ist, zwei beliebige Signale zu empfangen, die durch eine beliebige bezeichnete Taste der Vielzahl von Tasten (1, 2, 3) in zeitlicher Abfolge innerhalb eines ersten Zeitraums T gesendet werden, wobei die zwei Signale erste Entfernungsinformationen a₁ beziehungsweise zweite Entfernungsinformationen a₂ umfassen, und, wenn die zwei Signale die Bedingung erfüllen, dass das erste Entfernungssignal a₁ in einem ersten Entfernungsbereich R₁ und das zweite Entfernungssignal a₂ in einem zweiten Entfernungsbereich R₂ liegt, bestimmt wird, dass eine berührungslose Tastenbetätigung vorliegt, wobei ein Zwischenwert des ersten Entfernungsbereichs R₁ größer als ein Zwischenwert des zweiten Entfernungsbereichs R₂ ist.

4. Aufzugssteuerungsvorrichtung nach Anspruch 2 oder 3, wobei der Prozessor (8) dazu konfiguriert ist, drei beliebige Signale zu empfangen, die durch eine beliebige bezeichnete Taste der Vielzahl von Tasten (1, 2, 3) in zeitlicher Abfolge innerhalb eines ersten Zeitraums T gesendet werden, wobei die drei Signale erste Entfernungsinformationen a₂, zweite Entfernungsinformationen a₂ beziehungsweise dritte Entfernungsinformationen a₃ umfassen, und, wenn die drei Signale die Bedingung erfüllen, dass das erste Entfernungssignal a₂ in einem ersten Entfernungsbereich R₁ liegt, das zweite Entfernungssignal a₂ in einem zweiten Entfernungsbereich R₂ liegt und das dritte Entfernungssignal a₃ in einem dritten Entfernungsbereich R₃ liegt, bestimmt wird, dass eine berührungslose Tastenbetätigung vorliegt, wobei ein Zwischenwert des ersten Entfernungsbereichs R₁ größer als ein Zwischenwert des zweiten Entfernungsbereichs R₂ ist und der Zwischenwert des zweiten Entfernungsbereichs R₂ größer als ein Zwischenwert des dritten Entfernungsbereichs R₃ ist.

5. Aufzugssteuerungsvorrichtung nach Anspruch 3 oder 4, wobei der Prozessor (8) zu Folgendem konfiguriert ist: wenn eine berührungslose Tastenbetätigung durch die bezeichnete Taste erfasst wird, Bestimmen, ob mindestens eine Taste, die der bezeichneten Taste benachbart ist, das Annähern eines Objekts (5) innerhalb eines zweiten Zeitraums T' erfasst hat; falls ja, Nichtausführen der der bezeichneten Taste entsprechenden Betätigung; und falls nein, Ausführen der der bezeichneten Taste entsprechenden Betätigung.

6. Aufzugssteuerungsvorrichtung nach Anspruch 5, wobei der Vorgang des Bestimmens, ob mindestens eine Taste, die der bezeichneten Taste benachbart ist, ein Objekt (5) erfasst hat, Erfassen in dem zweiten Zeitraum T', ob es ein Objekt gibt, dessen Entfernung von jeder der benachbarten Tasten in dem ersten Entfernungsbereich R₁, dem zweiten Entfernungsbereich R₂ oder dem dritten Entfernungsbereich R₃ liegt, umfasst.

7. Aufzugssteuerungsvorrichtung nach einem der vorhergehenden Ansprüche, wobei die Vielzahl von Tasten (1, 2, 3) jeweils Folgendes umfasst:
ein Tastenfeld (11);
einen TOF-Sensor (12) auf einer Rückseite des Tastenfelds (11); und
eine gedruckte Leiterplatte (4), wobei der TOF-Sensor (12) elektrisch mit der gedruckten Leiterplatte (4) gekoppelt ist, um mit dem Prozessor (8) verbunden zu sein.

8. Aufzugssteuerungsvorrichtung nach Anspruch 7, wobei das Tastenfeld (11) ein lichtdurchlässiges Feld ist und die gedruckte Leiterplatte (4) ferner mit LED-Leuchten (41) versehen ist, die aufleuchten, nachdem die Taste ausgelöst wurde.

9. Aufzugssteuerungsvorrichtung nach einem der vorhergehenden Ansprüche, wobei die Taste, die der bezeichneten Taste benachbart ist, eine Taste ist, deren Entfernung von der bezeichneten Taste in einem Bereich von 10 mm-100 mm liegt, oder die Taste, die der bezeichneten Taste benachbart ist, eine Taste ist, die der bezeichneten Taste direkt benachbart ist, oder eine Taste ist, die von der bezeichneten Taste nur um eine Taste beabstandet ist.

10. Aufzugsystem, die Aufzugssteuerungsvorrichtung nach einem der Ansprüche 1 bis 9 umfassend, die als Hallensteuerungsvorrichtung oder als Kabinensteuerungsvorrichtung dient.

11. Verfahren zum Vermeiden einer Fehlauslösung einer Aufzugssteuerungsvorrichtung, wobei die Aufzugssteuerungsvorrichtung eine Steuertafel (9) umfasst, die eine Vielzahl von Tasten (1, 2, 3) umfasst, und jede der Vielzahl von Tasten (1, 2, 3) in der Lage ist, das Annähern eines Objekts (5) berührungslos zu erfassen und ein Signal zu senden; wobei, wenn Signale, die durch mindestens zwei benachbarte Tasten der Vielzahl von Tasten (1, 2, 3) gesendet werden, innerhalb eines definierten Zeitraums empfangen werden, eine den Signalen entsprechende Betätigung nicht ausgeführt wird.

12. Verfahren zum Vermeiden einer Fehlauslösung nach Anspruch 11, wobei das Verfahren Empfangen zweier beliebiger Signale umfasst, die durch eine beliebige bezeichnete Taste der Vielzahl von Tasten (1, 2, 3) in zeitlicher Abfolge innerhalb eines ersten Zeitraums T gesendet werden, wobei die zwei Signale erste Entfernungsinformationen a₁ beziehungsweise zweite Entfernungsinformationen a₂ umfassen, und, wenn die zwei Signale die Bedingung erfüllen, dass das erste Entfernungssignal a₁ in einem ersten Entfernungsbereich R₁ und das zweite Entfernungssignal a₂ in einem zweiten Entfernungsbereich R₂ liegt, bestimmt wird, dass eine berührungslose Tastenbetätigung vorliegt, wobei ein Zwischenwert des ersten Entfernungsbereichs R₁ größer als ein Zwischenwert des zweiten Entfernungsbereichs R₂ ist.

13. Verfahren zum Vermeiden einer Fehlauslösung nach Anspruch 11 oder 12, wobei das Verfahren Empfangen dreier beliebiger Signale umfasst, die durch eine beliebige bezeichnete Taste der Vielzahl von Tasten in zeitlicher Abfolge innerhalb eines ersten Zeitraums T gesendet werden, wobei die drei Signale erste Entfernungsinformationen a₁, zweite Entfernungsinformationen a₂ beziehungsweise dritte Entfernungsinformationen a₃ umfassen, und, wenn die drei Signale die Bedingung erfüllen, dass das erste Entfernungssignal a₁ in einem ersten Entfernungsbereich R₁ liegt, das zweite Entfernungssignal a₂ in einem zweiten Entfernungsbereich R₂ liegt und das dritte Entfernungssignal a₃ in einem dritten Entfernungsbereich R₃ liegt, bestimmt wird, dass eine berührungslose Tastenbetätigung vorliegt, wobei ein Zwischenwert des ersten Entfernungsbereichs R₁ größer als ein Zwischenwert des zweiten Entfernungsbereichs R₂ ist und der Zwischenwert des zweiten Entfernungsbereichs R₂ größer als ein Zwischenwert des dritten Entfernungsbereichs R₃ ist.

14. Verfahren zum Vermeiden einer Fehlauslösung nach Anspruch 12 oder 13, wobei das Verfahren Folgendes umfasst: wenn eine berührungslose Tastenbetätigung durch die bezeichnete Taste erfasst wird, Bestimmen, ob mindestens eine Taste, die der bezeichneten Taste benachbart ist, das Annähern eines Objekts innerhalb eines zweiten Zeitraums T' erfasst hat; falls ja, Nichtausführen der der bezeichneten Taste entsprechenden Betätigung; und falls nein, Ausführen der der bezeichneten Taste entsprechenden Betätigung.

15. Verfahren zum Vermeiden einer Fehlauslösung nach Anspruch 14, wobei der Vorgang des Bestimmens, ob mindestens eine Taste, die der bezeichneten Taste benachbart ist, ein Objekt erfasst hat, Erfassen in dem zweiten Zeitraum T', ob es ein Objekt gibt, dessen Entfernung von jeder der benachbarten Tasten in dem ersten Entfernungsbereich R₁, dem zweiten Entfernungsbereich R₂ oder dem dritten Entfernungsbereich R₃ liegt, umfasst.

## Revendications

1. Dispositif de commande d'ascenseur, comprenant :
un panneau de commande (9), qui comprend une pluralité de boutons (1, 2, 3), chacun de la pluralité de boutons étant capable de détecter l'approche d'un objet sans contact ; et
un processeur (8), qui est connecté au panneau de commande (9) pour recevoir des signaux envoyés par la pluralité de boutons (1, 2, 3) lorsque l'approche d'un objet est détectée ;
**caractérisé en ce que** le processeur (8) est configuré pour, lors de la réception de signaux envoyés par au moins deux boutons adjacents de la pluralité de boutons au cours d'une période définie, ne pas exécuter une opération correspondant aux signaux.

2. Dispositif de commande d'ascenseur selon la revendication 1, dans lequel la pluralité de boutons (1, 2, 3) comprend un capteur TOF (12) pour détecter la distance jusqu'à l'objet (5), et les signaux envoyés par la pluralité de boutons (1, 2, 3) comprennent des informations de distance.

3. Dispositif de commande d'ascenseur selon la revendication 2, dans lequel le processeur (8) est configuré pour recevoir deux signaux quelconques envoyés par un quelconque bouton désigné de la pluralité de boutons (1, 2, 3) dans une séquence temporelle au cours d'une première période T, les deux signaux comprennent respectivement des premières informations de distance a₁ et des deuxièmes informations de distance a₂, et lorsque les deux signaux vérifient que le premier signal de distance a₁ est dans une première plage de distance R₁ et que le deuxième signal de distance a₂ est dans une deuxième plage de distance R₂, il est déterminé qu'il existe une opération de bouton sans contact, dans lequel une valeur intermédiaire de la première plage de distance R₁ est supérieure à une valeur intermédiaire de la deuxième plage de distance R₂.

4. Dispositif de commande d'ascenseur selon la revendication 2 ou 3, dans lequel le processeur (8) est configuré pour recevoir trois signaux quelconques envoyés par un quelconque bouton désigné de la pluralité de boutons (1, 2, 3) dans une séquence temporelle au cours d'une première période T, les trois signaux comprennent respectivement des premières informations de distance a₂, des deuxièmes informations de distance a₂ et des troisièmes informations de distance a₃, et lorsque les trois signaux vérifient que le premier signal de distance a₂ est dans une première plage de distance R₁, que le deuxième signal de distance a₂ est dans une deuxième plage de distance R₂ et que le troisième signal de distance a₃ est dans une troisième plage de distance R₃, il est déterminé qu'il existe une opération de bouton sans contact, dans lequel une valeur intermédiaire de la première plage de distance R₁ est supérieure à une valeur intermédiaire de la deuxième plage de distance R₂, et la valeur intermédiaire de la deuxième plage de distance R₂ est supérieure à une valeur intermédiaire de la troisième plage de distance R₃.

5. Dispositif de commande d'ascenseur selon la revendication 3 ou 4, dans lequel le processeur (8) est configuré pour : lorsqu'une opération de bouton sans contact est détectée par le bouton désigné, déterminer si au moins un bouton adjacent au bouton désigné a détecté l'approche d'un objet (5) au cours d'une seconde période T' ; si oui, ne pas exécuter l'opération correspondant au bouton désigné ; et sinon, exécuter l'opération correspondant au bouton désigné.

6. Dispositif de commande d'ascenseur selon la revendication 5, dans lequel le processus permettant de déterminer si au moins un bouton adjacent au bouton désigné a détecté un objet (5) comprend le fait de détecter, au cours de la seconde période T', s'il existe un objet dont la distance qui le sépare de chacun des boutons adjacents se trouve dans la première plage de distance R₁, la deuxième plage de distance R₂ ou la troisième plage de distance R₃.

7. Dispositif de commande d'ascenseur selon une quelconque revendication précédente, dans lequel chacun de la pluralité de boutons (1, 2, 3) comprend :
un panneau de boutons (11) ;
un capteur TOF (12) sur un côté arrière du panneau de boutons (11) ; et
une carte de circuit imprimé (4), dans lequel le capteur TOF (12) est couplé électriquement à la carte de circuit imprimé (4) de manière à être connecté au processeur (8).

8. Dispositif de commande d'ascenseur selon la revendication 7, dans lequel le panneau de boutons (11) est un panneau de transmission de lumière, et la carte de circuit imprimé (4) est également dotée de lumières LED (41), qui s'allument après le déclenchement du bouton.

9. Dispositif de commande d'ascenseur selon une quelconque revendication précédente, dans lequel le bouton adjacent au bouton désigné est un bouton dont la distance qui le sépare du bouton désigné se trouve dans une plage allant de 10 mm à 100 mm, ou le bouton adjacent au bouton désigné est un bouton directement adjacent au bouton désigné ou un bouton espacé du bouton désigné d'un seul bouton.

10. Système d'ascenseur, comprenant le dispositif de commande d'ascenseur selon l'une quelconque des revendications 1 à 9, qui sert de dispositif de commande de hall ou de dispositif de commande embarqué.

11. Procédé de prévention de faux déclenchement d'un dispositif de commande d'ascenseur, le dispositif de commande d'ascenseur comprenant un panneau de commande (9) qui comprend une pluralité de boutons (1, 2, 3), et chacun de la pluralité de boutons (1, 2, 3) étant capable de détecter l'approche d'un objet (5) sans contact et d'envoyer un signal ; dans lequel lorsque des signaux envoyés par au moins deux boutons adjacents de la pluralité de boutons (1, 2, 3) sont reçus au cours d'une période définie, une opération correspondant aux signaux n'est pas exécutée.

12. Procédé de prévention de faux déclenchement selon la revendication 11, dans lequel le procédé comprend la réception de deux signaux quelconques envoyés par un quelconque bouton désigné de la pluralité de boutons (1, 2, 3) dans une séquence temporelle au cours d'une première période T, les deux signaux comprennent respectivement des premières informations de distance a₁ et des deuxièmes informations de distance a₂, et lorsque les deux signaux vérifient que le premier signal de distance a₁ est dans une première plage de distance R₁ et que le deuxième signal de distance a₂ est dans une deuxième plage de distance R₂, il est déterminé qu'il existe une opération de bouton sans contact, dans lequel une valeur intermédiaire de la première plage de distance R₁ est supérieure à une valeur intermédiaire de la deuxième plage de distance R₂.

13. Procédé de prévention de faux déclenchement selon la revendication 11 ou 12, dans lequel le procédé comprend la réception de trois signaux quelconques envoyés par un quelconque bouton désigné de la pluralité de boutons dans une séquence temporelle au cours d'une première période T, les trois signaux comprennent respectivement des premières informations de distance a₁, des deuxièmes informations de distance a₂ et des troisièmes informations de distance a₃, et lorsque les trois signaux vérifient que le premier signal de distance a₂ est dans une première plage de distance R₁, que le deuxième signal de distance a₂ est dans une deuxième plage de distance R₂ et que le troisième signal de distance a₃ est dans une troisième plage de distance R₃, il est déterminé qu'il existe une opération de bouton sans contact, dans lequel une valeur intermédiaire de la première plage de distance R₁ est supérieure à une valeur intermédiaire de la deuxième plage de distance R₂, et la valeur intermédiaire de la deuxième plage de distance R₂ est supérieure à une valeur intermédiaire de la troisième plage de distance R₃.

14. Procédé de prévention de faux déclenchement selon la revendication 12 ou 13, dans lequel le procédé comprend : lorsqu'une opération de bouton sans contact est détectée par le bouton désigné, le fait de déterminer si au moins un bouton adjacent au bouton désigné a détecté l'approche d'un objet au cours d'une seconde période T' ; si oui, la non-exécution de l'opération correspondant au bouton désigné ; et sinon, l'exécution de l'opération correspondant au bouton désigné.

15. Procédé de prévention de faux déclenchement selon la revendication 14, dans lequel le processus permettant de déterminer si au moins un bouton adjacent au bouton désigné a détecté un objet comprend le fait de détecter, au cours de la seconde période T', s'il existe un objet dont la distance qui le sépare de chacun des boutons adjacents se trouve dans la première plage de distance R₁, la deuxième plage de distance R₂ ou la troisième plage de distance R₃.
